# EUROPEAN PATENT SPECIFICATION

(11) **EP 4 028 607 B1**
(45) Date of publication and mention of the grant of the patent: **12.03.2025**
(21) Application number: 20772040.0
(22) Date of filing: 12.09.2020
(51) Int. Cl.: E04C 2/292, B29C 44/00

(54) **SANDWICH PANEL AND METHOD OF MANUFACTURING SUCH A SANDWICH PANEL**
SANDWICHPLATTE UND VERFAHREN ZUR HERSTELLUNG SOLCH EINER SANDWICHPLATTE
PANNEAU SANDWICH ET PROCÉDÉ DE FABRICATION D'UN TEL PANNEAU SANDWICH

(30) Priority: 12.09.2019 EP 19196922
(43) Date of publication of application: 20.07.2022
(73) Proprietor: Tata Steel IJmuiden B.V., 1951 JZ Velsen-Noord (NL)
(72) Inventor: ORLOV, Andre, 1970 CA IJmuiden (NL); MATHER, William David, 1970 CA IJmuiden (NL)
(74) Representative: Group Intellectual Property Services
(86) International application number: PCT/EP2020/075578
(87) International publication number: WO 2021/048428

(56) References cited:
- EP-A1- 1 233 114
- EP-B1- 1 233 114
- WO-A1-2005/028179
- GB-A- 1 327 533
- JP-A- H0 941 515
- US-A- 3 650 863
- US-A1- 2002 012 785

## Description

The invention relates to a sandwich panel and a method of manufacturing such a sandwich panel.

Sandwich panels comprising a first and a second metal profile with an in between foam core are known as are methods of manufacturing such sandwich panels. For instance, JPH0941515 (A) discloses a panel comprising a front surface material, back surface material and core foam material made of a phenol resin which is sandwiched therebetween. The building panel also comprises a plurality of grains made of a dried phenol resin foam body which are mixed into the core material.

It is found that the surface quality of the first metal profile, usually a steel profile, is particularly critical because it eventually forms the external face of the ready sandwich panel. It is common practice for manufacturers to use a primer (glue) to improve the bond between the foam core and the metal profile. Nevertheless, it is not a guaranteed solution and it remains not uncommon to find "blisters" or other related defects near the steel skin causing delamination of the metal profile from the foam at the external surface of the building at which the sandwich panel is used - particularly where the weather creates thermal cycling to open up sub-surface defects. This may lead to customer claims and costly repairs.

It is an object of the invention to provide a sandwich panel and a method of its manufacturing which to a large extent, if not entirely, tackles the above-mentioned problem.

To this end, according to the invention, a sandwich panel and a method of manufacturing such a sandwich panel are proposed in accordance with the features of one or more of the appended claims.

According to an aspect of the invention, providing the foam core is split into at least two steps, namely one step of providing a first foam layer and a further step of providing a second foam layer such that the second foam layer contacts the first foam layer after the first foam layer has risen to a predefined first distance away from the first metal profile. Accordingly a sandwich panel is provided wherein the first foam layer completely covers the first metal profile or an optional primer on the first metal profile, wherein the foam-foam interface between the first foam layer and the second foam layer is provided at a predefined distance from the first metal profile.

The invention is also embodied in a method of manufacturing a metal-foam-metal sandwich panel comprising the steps of, between a first metal profile and a second metal profile, providing optionally a primer on the first metal profile, providing a first foam layer on the optional primer and/or on the first metal profile, providing a second foam layer contacting the first foam layer, wherein the second foam layer contacts the first foam layer after the first foam layer has risen to a predefined distance away from the first metal profile which is after initial cross-linking and strengthening of the first foam layer but before the first foam layer is form-stable.

The invention may also be described as a method of manufacturing a sandwich panel comprising a foam core between a first metal profile and a second metal profile, wherein on the first metal profile an optional primer is applied, on which optional primer the foam core is applied, on which foam core the second metal profile is applied, wherein the foam core is applied in at least two separate steps involving applying a first foam layer, and subsequently applying a second foam layer and subsequently optionally applying further foam layers, all foam layers after application collectively forming the foam core, wherein the second foam layer contacts the first foam layer only after the first foam layer has reached its gel time, in order to let the first foam layer rise freely, thereby enabling the first foam layer to resist any forces that arise when the second or a further foam layer impinges on the second metal profile, and in order to achieve that if any shear forces are to cause disruptions in the foam layers the weakest spot is moved away from the first metal profile, e.g. to the foam-foam interface between the first and the second foam layer.

The foam of the first foam layer and of the second foam layer may be of the same composition. In that case the density of the first foam layer will be almost equal to but slightly lower than the density of the second foam layer because according to the invention, the first foam layer will be allowed to rise freely. The density of the foam core may be in the range of 34-50 kg/m3 and in a specific example of a panel according to the invention, the density of the first foam layer may be 38 kg/m3 and that of the second foam layer may be 39 kg/m3. In practical cases the distance of the foam-foam interface from the first metal profile will be in the order of 5-95 % and in most cases 10-90 % of the shortest distance between the first metal profile and the second metal profile.

The invention is based on the insight that the prior art defects are often caused when the top surface of the gelling foam core is compressed as it rises against the second metal profile, and that the whole foam core is, by this time, sufficiently strong to transfer forces through the foam core to the surface of the first metal profile, where friction resulting from the continuous movement of the first metal profile and the foam creates shear stresses that locally break down the foam cellular structure at or near this lower interface between the foam and the first metal profile.

By arranging that the step of providing the second foam layer on the first foam layer is executed after the first foam layer has developed to a predefined first distance away from the first metal profile, the effect is provided that the first foam layer gains more strength to resist any forces that arise when the second foam layer impinges on the second metal profile, and that if any shear forces are to cause disruptions in the first or second foam layer, that the 'weakest' spot is moved away from the first metal profile, e.g. to the foam-foam interface, which foam-foam interface is at least 10 mm and preferably 15 mm away from the first metal profile, and may in a practical example may be approximately 20 mm away from the first metal profile. This location for defects is found to be hugely less problematic than defects in the immediate neighbourhood of the first metal profile because such defects would not leave a visible indentation on the outer skin of the sandwich panel and also, the defects in the foam-foam interface would be insulated by the foam from the effects of thermal cycling when the sandwich panel is exposed to weather conditions on the side of a building wherein the sandwich panel is applied, such thermal cycling being known to exacerbate blistering.

Consistent with the above-mentioned considerations it is preferable that the second foam layer is provided on the first foam layer before the first foam layer has reached a second distance from the first metal profile, at which second distance the second metal profile will be provided.

Desirably the second foam layer is provided on the first foam layer after initial cross-linking and strengthening of the first foam layer but before the first foam layer is form-stable. In practice this form stability will be reached around the time that foam experts call "gel time". Gel time means that the core of the foam is not in a liquid state anymore, but is becoming a rubberlike solid.

Suitably the second foam layer is provided on the first foam layer within a 0 - 10 s (seconds) time slot following the initial cross-linking and strengthening of the first foam layer.

It is possible to avoid using a primer, but it may in certain circumstances be advantageous that between the first foam layer and the first metal profile a primer is provided. Instead of a regular gluing primer a less costly substitute may be applied such that any shear stresses are properly relieved in the intermediate foam-foam interface rather than near the first metal profile. The primer may be foamable to provide higher temperatures for the polymerising foam and therefore increase its cohesion. The primer may contain flame retardant additives to provide improved performance in case of fire. The primer typically has a thickness of 0,5 to 1,0 mm.

Other advantages of applying two (or more) foam layers between the first metal profile at the second metal profile can be itemised as follows.

Allowing the (quality critical) first foam layer to form as a "free rise" foam means it is not significantly affected by being constrained within a restricted space. Further it is possible that improved thermal and/or mechanical properties can be provided to the sandwich panel by a suitable selection of foams. Also, the method of manufacturing the sandwich panel which could be extended to having three or more foam layers lends itself to tailoring the properties of the respective foam layers through the applied thicknesses - for example using more fire retardant (and relatively costly) chemicals near the interface between the first metal profile and the first foam layer, where the sandwich panel is more likely to be exposed to fire, and less of those costly chemicals in the midsection where thermal properties and low cost are more important.

It is possible that the foam layers between the first metal profile and the second metal profile comprise individually different additives, preferably selected from the group comprising solid powder additives, electronic devices and sensors.

It is further possible that a small foam density reduction can be applied because of better foam structure resulting from more 'free rising' of the first foam layer and the potential for better control of the volume of liquid applied for the second foam layer. This relates to the distance that the second foam layer must 'rise' until it meets the second metal profile, the liquid application therefore may get reduced and precision of application can be improved. Foam is an expensive component of panels and small reductions in density are accordingly valuable.

The invention will hereinafter be further elucidated with reference to a schematic drawing of an exemplary embodiment of a method of manufacturing a sandwich panel according to the prior art and according to the invention that is not limiting as to the appended claims.

In the drawing:
Figure 1a/1b shows a method of manufacturing a sandwich panel according to the prior art; and
Figure 2 shows a method of manufacturing a sandwich panel according to the invention.

Whenever in the figures the same reference numerals are applied, these numerals refer to the same parts.

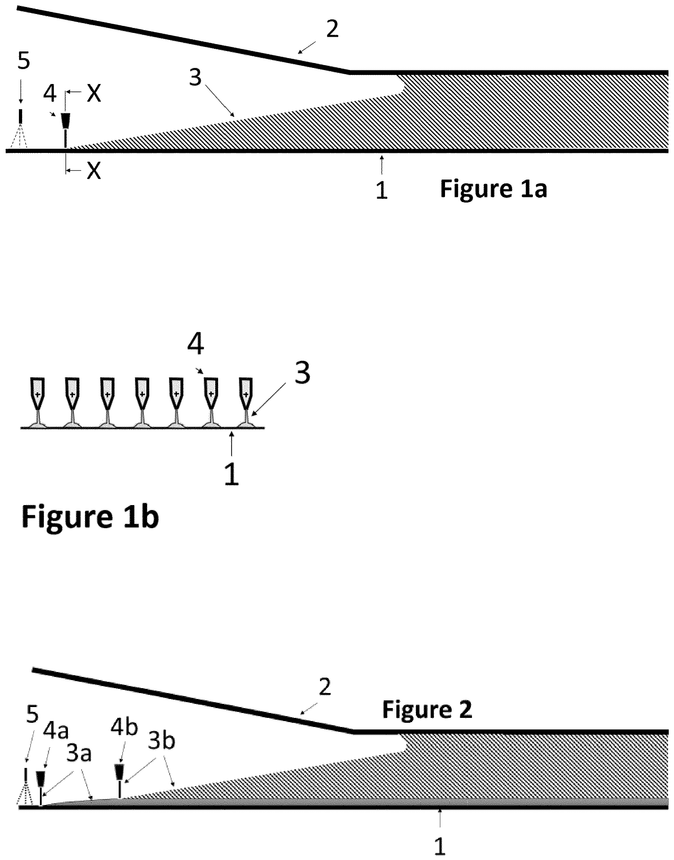

In figure 1a a schematic side view is shown of manufacturing a sandwich panel according to the prior art, wherein the sandwich panel comprises a bottom sheet 1, a top sheet 2, a single insulating foam layer 3 which is provided on the bottom sheet 1 by a series of foam nozzles 4 (figure 1b showing the nozzles according to the line X -X in figure 1a), and optionally a primer nozzle 5 for applying a gluing primer on the bottom sheet 1. As the schematic drawing of figure 1a shows the single foam layer 3 is provided on the bottom sheet 1, and rises up to the underside of the top sheet 2. When the foam 3 impinges on said top sheet 2, it rolls back, and forces are transmitted from this upper side through the foam 3 down to the bottom sheet 1, where shear forces between sheet 1 and foam 3 occur that cause damage to the foam cell structure.

Making now reference to figure 2, the method of manufacturing a sandwich panel according to the invention is schematically shown wherein two rows of foam outlets 4a, 4b are applied. With the first row of foam outlets 4a a first foam layer 3a is applied to the bottom sheet 1. With the second row of foam outlets 4b a second foam layer 3b is applied to the first foam layer 3a, such that the first foam layer 3a completely covers the first metal profile or bottom sheet 1 and a foam-foam interface between the first foam layer 3a and the second foam layer 3b is provided at a predefined location between and distant from the first metal profile or bottom sheet 1 and the second metal profile or top sheet 2. It is also possible, although not necessary, that with the primer nozzle 5 a primer is provided to the first metal profile or bottom sheet 1. This primer may be foamable.

The interface between the first foam layer 3a and the second foam layer 3b is provided such that the first foam layer 3a has risen to a predefined first distance away from the first metal profile or bottom sheet 1, before the second foam layer 3b is provided on the first foam layer 3a. At that time initial cross-linking and strengthening of the first foam layer 3a has started but the first foam layer 3a is not yet form-stable. Preferably the second foam layer 3b is provided on the first foam layer 3a within a 0 - 10 s time slot following the initial cross-linking and strengthening of the first foam layer 3a.

Although the invention has been discussed in the foregoing with reference to the method of the prior art and an exemplary embodiment of the method of the invention, the invention is not restricted to this particular embodiment which can be varied in many ways without departing from the appended claims.

The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Sandwich panel obtained by the method according to any one of the Claims 8-13, comprising a first and a second metal profile (1,2), a foam core between the first metal profile (1) and the second metal profile (2) which foam core comprises a first foam layer (3a) on the first metal profile (1) or on an optional primer that may be provided on the first metal profile (1), and a second foam layer (3b) on the first foam layer (3a), wherein the first foam layer (3a) completely covers the optional primer and/or the first metal profile (1) and the second foam layer completely covers and is in direct contact with the first foam layer (3a) at a foam-foam interface between the first foam layer (3a) and the second foam layer (3b) wherein the foam-foam interface is provided at a predefined distance from the first metal profile (1).

2. Sandwich panel according to claim 1 , wherein the primer is foamable.

3. Sandwich panel according to any one of claims 1 - 2, wherein the distance equals 10-90 % of the shortest distance between the first metal profile (1) and the second metal profile (2).

4. Sandwich panel according to any one of the preceding claims, wherein the density of the first foam layer (3a) is equal to or slightly lower than the density of the second foam layer (3b).

5. Sandwich panel according to any one of the preceding claims, wherein the foam core comprises further foam layers.

6. Sandwich panel according to any one of the preceding claims, wherein the foam layers have individually different physical, chemical and/or dimensional properties.

7. Sandwich panel according to any one of the preceding claims, wherein the foam layers comprise individually different additives, preferably selected from the group comprising solid powder additives, electronic devices and sensors.

8. Method of manufacturing a metal-foam-metal sandwich panel comprising the steps of, between a first metal profile (1) and a second metal profile (2), providing optionally a primer on the first metal profile (1), providing a first foam layer (3a) on the optional primer and/or on the first metal profile (1), providing a second foam layer (3b) contacting the first foam layer (3a), wherein the second foam layer (3b) contacts the first foam layer (3a) after the first foam layer (3a) has risen to a predefined distance away from the first metal profile (1) which is after initial cross-linking and strengthening of the first foam layer (3a) but before the first foam layer (3a) is form-stable.

9. Method of manufacturing a sandwich panel comprising a foam core between a first metal profile (1) and a second metal profile (2), wherein on the first metal profile an optional primer is applied, on which optional primer the foam core is applied, on which foam core the second metal profile (2) is applied, wherein the foam core is applied in at least two separate steps involving applying a first foam layer (3a), and subsequently applying a second foam layer (3b) and subsequently optionally applying further foam layers, all foam layers after application collectively forming the foam core, wherein the second foam layer (3b) contacts the first foam layer (3a) only after the first foam layer (3a) has reached its gel time, in order to let the first foam layer (3a) rise freely, thereby enabling the first foam layer (3a) to resist any forces that arise when the second or a further foam layer (3b) impinges on the second metal profile (2), and in order to achieve that if any shear forces are to cause disruptions in the foam layers (3a, 3b) the weakest spot is moved away from the first metal profile (1).

10. Method according to claim 8 or 9, wherein the second foam layer (3b) is provided on the first foam layer (3a) within a 0 - 10 s time slot following the initial cross-linking and strengthening of the first foam layer (3a).

11. Method according to any one of claims 8 - 10, wherein between the second foam layer (3b) and the second metal layer (2) further foam layers are provided.

12. Method according to any one of claims 8 - 11, wherein the foam layers (3a, 3b) between the first metal profile (1) and the second metal profile (2) are provided with individually different physical, chemical and/or dimensional properties.

13. Method according to any one of claims 8 - 12, wherein the foam layers (3a, 3b) between the first metal profile (1) and the second metal profile (2) are provided with individually different additives, preferably selected from the group comprising solid powder additives, electronic devices and sensors.

## Patentansprüche

1. Sandwichplatte, die durch das Verfahren nach einem der Ansprüche 8-13 erhalten wird, umfassend ein erstes und ein zweites Metallprofil (1, 2), einen Schaumkern zwischen dem ersten Metallprofil (1) und dem zweiten Metallprofil (2), wobei der Schaumkern eine erste Schaumschicht (3a) auf dem ersten Metallprofil (1) oder auf einer optionalen Grundierung, die auf dem ersten Metallprofil (1) bereitgestellt sein kann, und eine zweite Schaumschicht (3b) auf der ersten Schaumschicht (3a) umfasst, wobei die erste Schaumschicht (3a) die optionale Grundierung und/oder das erste Metallprofil (1) vollständig bedeckt und die zweite Schaumschicht die erste Schaumschicht (3a) vollständig bedeckt und an einer Schaum-Schaum-Schnittstelle zwischen der ersten Schaumschicht (3a) und der zweiten Schaumschicht (3b) in direktem Kontakt damit ist, wobei die Schaum-Schaum-Schnittstelle in einem vordefinierten Abstand von dem ersten Metallprofil (1) bereitgestellt ist.

2. Sandwichplatte nach Anspruch 1, wobei die Grundierung aufschäumbar ist.

3. Sandwichplatte nach einem der Ansprüche 1-2, wobei der Abstand 10-90 % des kürzesten Abstands zwischen dem ersten Metallprofil (1) und dem zweiten Metallprofil (2) gleicht.

4. Sandwichplatte nach einem der vorhergehenden Ansprüche, wobei die Dichte der ersten Schaumschicht (3a) gleich der oder geringfügig niedriger als die Dichte der zweiten Schaumschicht (3b) ist.

5. Sandwichplatte nach einem der vorhergehenden Ansprüche, wobei der Schaumkern weitere Schaumschichten umfasst.

6. Sandwichplatte nach einem der vorhergehenden Ansprüche, wobei die Schaumschichten individuell unterschiedliche physikalische, chemische und/oder dimensionale Eigenschaften aufweisen.

7. Sandwichplatte nach einem der vorhergehenden Ansprüche, wobei die Schaumschichten individuell unterschiedliche Additive umfassen, bevorzugt ausgewählt aus der Gruppe umfassend feste Pulveradditive, elektronische Vorrichtungen und Sensoren.

8. Verfahren zur Herstellung einer Metall-Schaum-Metall-Sandwichplatte, umfassend die Schritte, zwischen einem ersten Metallprofil (1) und einem zweiten Metallprofil (2), des optionalen Bereitstellens einer Grundierung auf dem ersten Metallprofil (1), Bereitstellens einer ersten Schaumschicht (3a) auf der optionalen Grundierung und/oder auf dem ersten Metallprofil (1), Bereitstellens einer zweiten Schaumschicht (3b), welche die erste Schaumschicht (3a) kontaktiert, wobei die zweite Schaumschicht (3b) die erste Schaumschicht (3a) kontaktiert, nachdem die erste Schaumschicht (3a) zu einem vordefinierten Abstand weg von dem ersten Metallprofil (1) angestiegen ist, was nach anfänglicher Vernetzung und Verfestigung der ersten Schaumschicht (3a) ist, aber bevor die erste Schaumschicht (3a) formstabil ist.

9. Verfahren zur Herstellung einer Sandwichplatte, die einen Schaumkern zwischen einem ersten Metallprofil (1) und einem zweiten Metallprofil (2) umfasst, wobei auf das erste Metallprofil eine optionale Grundierung aufgetragen ist, auf die optionale Grundierung der Schaumkern aufgetragen ist, auf den Schaumkern das zweite Metallprofil (2) aufgetragen ist, wobei der Schaumkern in zumindest zwei separaten Schritten aufgetragen ist, die Auftragen einer ersten Schaumschicht (3a) und anschließendes Auftragen einer zweiten Schaumschicht (3b) und anschließendes optionales Auftragen von weiteren Schaumschichten involvieren, wobei alle Schaumschichten nach Auftragung gemeinsam den Schaumkern bilden, wobei die zweite Schaumschicht (3b) die erste Schaumschicht (3a) erst kontaktiert, nachdem die erste Schaumschicht (3a) ihre Gelzeit erreicht hat, um die erste Schaumschicht (3a) frei aufsteigen zu lassen, wodurch ermöglicht wird, dass die erste Schaumschicht (3a) beliebigen Kräften widersteht, die auftreten, wenn die zweite oder eine weitere Schaumschicht (3b) auf das zweite Metallprofil (2) auftrifft, und um zu erreichen, dass, wenn beliebige Scherkräfte Störungen in den Schaumschichten (3a, 3b) verursachen sollten, die schwächste Stelle weg von dem ersten Metallprofil (1) bewegt wird.

10. Verfahren nach Anspruch 8 oder 9, wobei die zweite Schaumschicht (3b) auf der ersten Schaumschicht (3a) innerhalb eines Zeitfensters von 0-10 s nach der anfänglichen Vernetzung und Verfestigung der ersten Schaumschicht (3a) bereitgestellt ist.

11. Verfahren nach einem der Ansprüche 8-10, wobei zwischen der zweiten Schaumschicht (3b) und der zweiten Metallschicht (2) weitere Schaumschichten bereitgestellt sind.

12. Verfahren nach einem der Ansprüche 8-11, wobei die Schaumschichten (3a, 3b) zwischen dem ersten Metallprofil (1) und dem zweiten Metallprofil (2) mit individuell unterschiedlichen physikalischen, chemischen und/oder dimensionalen Eigenschaften bereitgestellt sind.

13. Verfahren nach einem der Ansprüche 8-12, wobei die Schaumschichten (3a, 3b) zwischen dem ersten Metallprofil (1) und dem zweiten Metallprofil (2) mit individuell unterschiedlichen Additiven bereitgestellt sind, bevorzugt ausgewählt aus der Gruppe umfassend feste Pulveradditive, elektronische Vorrichtungen und Sensoren.

## Revendications

1. Panneau sandwich obtenu par le procédé selon l'une quelconque des revendications 8 à 13, comprenant un premier et un second profilé métallique (1, 2), un noyau en mousse entre le premier profilé métallique (1) et le second profilé métallique (2), lequel noyau en mousse comprend une première couche de mousse (3a) sur le premier profilé métallique (1) ou sur un apprêt éventuel qui peut être disposé sur le premier profilé métallique (1), et une seconde couche de mousse (3b) sur la première couche de mousse (3a), dans lequel la première couche de mousse (3a) recouvre complètement l'apprêt éventuel et/ou le premier profilé métallique (1) et la seconde couche de mousse recouvre complètement et est en contact direct avec la première couche de mousse (3a) au niveau d'une interface mousse-mousse entre la première couche de mousse (3a) et la seconde couche de mousse (3b), dans lequel l'interface mousse-mousse est disposée à une distance prédéfinie du premier profilé métallique (1).

2. Panneau sandwich selon la revendication 1, dans lequel l'apprêt est moussable.

3. Panneau sandwich selon l'une quelconque des revendications 1 et 2, dans lequel la distance est égale à 10 à 90 % de la distance la plus courte entre le premier profilé métallique (1) et le second profilé métallique (2).

4. Panneau sandwich selon l'une quelconque des revendications précédentes, dans lequel la densité de la première couche de mousse (3a) est égale ou légèrement inférieure à la densité de la seconde couche de mousse (3b).

5. Panneau sandwich selon l'une quelconque des revendications précédentes, dans lequel le noyau en mousse comprend des couches de mousse supplémentaires.

6. Panneau sandwich selon l'une quelconque des revendications précédentes, dans lequel les couches de mousse comportent des propriétés physiques, chimiques et/ou dimensionnelles individuellement différentes.

7. Panneau sandwich selon l'une quelconque des revendications précédentes, dans lequel les couches de mousse comprennent des additifs individuellement différents, de préférence choisis dans le groupe comprenant des additifs en poudre solide, des dispositifs électroniques et des capteurs.

8. Procédé de fabrication d'un panneau sandwich métal-mousse-métal comprenant les étapes de, entre un premier profilé métallique (1) et un second profilé métallique (2), fourniture éventuelle d'un apprêt sur le premier profilé métallique (1), fourniture d'une première couche de mousse (3a) sur l'apprêt éventuel et/ou sur le premier profilé métallique (1), fourniture d'une seconde couche de mousse (3b) en contact avec la première couche de mousse (3a), dans lequel la seconde couche de mousse (3b) entre en contact avec la première couche de mousse (3a) après que la première couche de mousse (3a) se soit élevée à une distance prédéfinie du premier profilé métallique (1), soit après la réticulation et le renforcement initiaux de la première couche de mousse (3a) mais avant que la première couche de mousse (3a) ne soit stable au niveau de la forme.

9. Procédé de fabrication d'un panneau sandwich comprenant un noyau en mousse entre un premier profilé métallique (1) et un second profilé métallique (2), dans lequel un apprêt éventuel est appliqué sur le premier profilé métallique, sur lequel apprêt éventuel le noyau en mousse est appliqué, sur lequel noyau en mousse le second profilé métallique (2) est appliqué, dans lequel le noyau en mousse est appliqué en au moins deux étapes séparées impliquant l'application d'une première couche de mousse (3a), puis l'application d'une seconde couche de mousse (3b) et ensuite l'application éventuelle de couches de mousse supplémentaires, toutes les couches de mousse, après application, formant collectivement le noyau en mousse, dans lequel la seconde couche de mousse (3b) entre en contact avec la première couche de mousse (3a) uniquement après que la première couche de mousse (3a) a atteint son temps de gel, afin de laisser la première couche de mousse (3a) monter librement, permettant ainsi à la première couche de mousse (3a) de résister à toutes les forces qui surviennent lorsque la seconde ou une couche de mousse supplémentaire (3b) heurte le second profilé métallique (2), et afin de parvenir à ce que, si des forces de cisaillement entraînent des ruptures dans les couches de mousse (3a, 3b), le point le plus faible soit éloigné du premier profilé métallique (1).

10. Procédé selon l'une des revendications 8 ou 9, dans lequel la seconde couche de mousse (3b) est disposée sur la première couche de mousse (3a) dans un intervalle de temps de 0 à 10 s après la réticulation et le renforcement initiaux de la première couche de mousse (3a).

11. Procédé selon l'une quelconque des revendications 8 à 10, dans lequel entre la seconde couche de mousse (3b) et la seconde couche métallique (2) des couches de mousse supplémentaires sont disposées.

12. Procédé selon l'une quelconque des revendications 8 à 11, dans lequel les couches de mousse (3a, 3b) entre le premier profilé métallique (1) et le second profilé métallique (2) sont dotées de propriétés physiques, chimiques et/ou dimensionnelles individuellement différentes.

13. Procédé selon l'une quelconque des revendications 8 à 12, dans lequel les couches de mousse (3a, 3b) entre le premier profilé métallique (1) et le second profilé métallique (2) sont dotées d'additifs individuellement différents, de préférence choisis dans le groupe comprenant des additifs en poudre solide, des dispositifs électroniques et des capteurs.
